# FASCICULE DE BREVET EUROPEEN

(11) **EP 4 062 771 B1**
(45) Date de publication et mention de la délivrance du brevet: **18.10.2023**
(21) Numéro de dépôt: 22173884.2
(22) Date de dépôt: 17.07.2020
(51) Int. Cl.: A23P 10/25

(54) **PROCEDE DE FABRICATION DE MIETTES ALIMENTAIRES**
VERFAHREN ZUR HERSTELLUNG VON LEBENSMITTELBRÖSELN
METHOD FOR MANUFACTURING EDIBLE CRUMBS

(30) Priorité: 05.09.2019 FR 1909792
(43) Date de publication de la demande: 28.09.2022
(62) Demande divisionnaire de: 20186366.9
(73) Titulaire: Culinari Mundi, 56000 Vannes (FR)
(72) Inventeur: DROPSY, Eric, 56000 VANNES (FR)
(74) Mandataire: Loyer & Abello

(56) Documents cités:
- WO-A1-2016/092456
- GB-A- 2 284 144
- GB-A- 2 437 415
- JP-A- 2005 192 566
- KR-B1- 101 941 681
- US-A- 4 038 433
- US-A1- 2007 031 575

## Description

### Domaine technique

L'invention se rapporte au domaine des procédés de fabrication de produits alimentaires se présentant sous formes de poudre ou de morceaux, sucrés et/ou salés, principalement destinés à servir de décors, d'inclusions ou de bases sur, ou dans, ou sous, ou autour d'autres produits alimentaires, ou à être consommés en l'état par exemple comme friandises ou snacks.

### Arrière-plan technologique

Le document US4038433A divulgue un procédé de transformation de denrées alimentaires végétales comprenant les étapes : de cuisson, d'homogénéisation des légumes humides, de broyage de la masse, de coupage à l'aide de couteaux rotatifs afin d'obtenir une pluralité de fragments, et de conversion de ces fragments en miettes. Ces étapes sont de préférences effectuées à chaud.

Le document US2007031575A1 divulgue un procédé de fabrication d'un produit céréalier comprenant une étape de cuisson afin d'obtenir une masse de céréale humide. Après cuisson et dépressurisation à pression atmosphérique, le composant céréalier subit une étape de formation de pastilles à une température de 100 °C. Le document GB2437415A divulgue également un procédé de fabrication de miettes alimentaires.

### Résumé

Une idée à la base de l'invention est de fournir un procédé de fabrication de miettes alimentaires à base de pâte non fermentée pour obtenir des textures granulaires consistantes de type pâtisserie ou biscuit ou aliments végétaux.

A cet effet, la présente invention a pour objet un procédé de fabrication de miettes alimentaires tel que défini par la revendication 1. Ce procédé comprenant :
- cuire un mélange alimentaire non fermenté notamment jusqu'à atteindre un taux d'humidité intermédiaire compris entre 7% et 24% pour obtenir une composition cuite,
- granuler la composition cuite grâce à un granulateur pour obtenir des miettes alimentaires.

L'étape de cuisson permet d'obtenir une composition cuite présentant un taux d'humidité compris entre 7% et 24% et ayant à la fois une texture suffisamment molle pour éviter la casse des tamis lors de l'étape de granulation, mais également suffisamment résistante et cohésive pour ne pas se désagréger dès sa manipulation ou se transformer en masse informe lors de l'étape de granulation. L'étape de granulation avec un granulateur utilisant une composition cuite présentant une texture suffisamment molle permet de produire des miettes alimentaires ayant la taille désirée tout en évitant de générer un taux excessif de miettes trop fines, les miettes trop fines n'étant généralement pas désirées par les destinataires des produits, et altérant les rendements de transformation. Les miettes trop fines, aussi appelées particules fines ou encore « fines », sont des particules dont la taille est inférieure à celle requise par les clients.

On entend par mélange alimentaire non fermenté que le mélange alimentaire n'a pas subi de processus de fermentation en présence de micro-organismes tels notamment que des levures.

La composition cuite présente un taux d'humidité compris entre 7 % et 24 %, préférentiellement entre 9% et 19%.

Selon un mode de réalisation, la cuisson est effectuée à au moins une température.

Selon un mode de réalisation, la température de cuisson est comprise entre 90°C et 200°C pendant une durée comprise entre 10 et 150 min.

Selon un mode de réalisation, la température est variable au cours de la cuisson. En effet il peut être nécessaire de faire varier par palier la température au cours de la cuisson dans le cas de produits sensibles à des températures élevées, notamment par exemple des produits à base de fruits. Dans ce cas, la cuisson s'effectue souvent avec des paliers de température décroissants.

En général la granulation ne modifie pas l'humidité des miettes alimentaires de sorte que les miettes alimentaires présentent un taux d'humidité compris entre 7% et 24%, préférentiellement entre 9% et 19%

Le granulateur comprend un rotor. Différents granulateurs peuvent être utilisés. Un granulateur à rotor oscillant est utilisé.

Selon un mode de réalisation, le mouvement du rotor s'effectue autour d'un axe horizontal.

Le rotor effectue un mouvement oscillant ou rotatif.

Selon un mode de réalisation, le mouvement oscillant présente une fréquence d'oscillation comprise entre 0,2 et 5 Hz, préférentiellement entre 0,5 et 2 Hz.

Selon un mode de réalisation, une vitesse tangentielle au niveau d'un point de pincement de la composition cuite entre une extrémité du rotor et le tamis est comprise entre 5 cm.s⁻¹ et 100 cm.s⁻¹.

Selon un mode de réalisation, le granulateur comprend un tamis à mailles carrées. Cela permet de maximiser le pourcentage de passage libre au travers du tamis et de minimiser les écrasements de la composition cuite contre le tamis.

Le tamis présente une ouverture de maille comprise entre 0,2 mm et 25 mm, de préférence entre 0,5 mm et 15 mm.

Selon un mode de réalisation, le procédé comprend en outre :
- conserver les miettes alimentaires à une température comprise entre -18°C et +6°C après l'étape de granulation.

Le procédé comprend en outre :
- refroidir la composition cuite. Cela permet d'avoir une texture de la composition cuite adaptée pour la granulation. En d'autres termes cela permet de disposer encore à l'issue du refroidissement d'une composition cuite présentant une texture relativement molle mais cependant cohésive, tout en conservant des caractéristiques de conservation permettant sa conservation sans altération à température ambiante pendant, si besoin plusieurs jours, typiquement de 1 à 3 jours, voire si besoin plus, éventuellement en passant par une phase de réfrigération.

Le refroidissement est effectué à une température comprise entre 0°C et 35°C pendant une durée comprise entre 1h et 48h, de préférence entre 6h et 48h, par exemple entre 18 h et 24 h.

Selon un mode de réalisation, la température de la composition cuite refroidie est comprise entre 0°C et 50°C, de préférence entre 0°C et 35°C, par exemple 25°C.

Le procédé comprend en outre :
- sécher les miettes alimentaires. Cette étape permet d'abaisser la teneur en humidité du produit de manière à en assurer la bonne conservation dans les conditions de température et de durée souhaitées, et à obtenir après refroidissement une texture, généralement sablée ou croustillante ou croquante, souhaitée. De plus les miettes alimentaires conservent au final les meilleures caractéristiques de couleur, goût, texture, qualités nutritionnelles

Selon un mode de réalisation, le séchage est effectué à une température comprise entre 70 et 175°C pendant une durée comprise entre 5 min et 5h.

Selon un mode de réalisation, les miettes alimentaires séchées présentent un taux d'humidité inférieur à 6%, de préférence inférieur à 3%.

Selon un mode de réalisation, le procédé comprend en outre:
- refroidir les miettes alimentaires séchées, puis
- tamiser à nouveau les miettes alimentaires séchées et refroidies, puis
- conditionner les miettes alimentaires séchées, refroidies et tamisées.

Selon un mode de réalisation, le procédé comprend en outre :
- tamiser à nouveau les miettes alimentaires une fois séchées dans un tamis vibrant présentant une maille d'ouverture déterminée. En d'autres termes, après que le granulateur a effectué un premier tamisage au cours de la granulation de la composition cuite, un deuxième tamisage est effectué avec le tamis vibrant. Le premier tamisage permet de fixer la borne supérieure de la distribution de tailles, et le deuxième tamisage peut être utilisé pour régler sa borne inférieure si besoin, notamment quand des « fines » doivent être éliminées pour satisfaire aux attentes du client.

Selon un mode de réalisation, le procédé comprend en outre :
- couper la composition cuite avant de la granuler.

Selon un mode de réalisation, le procédé comprend en outre :
- mélanger au moins un ingrédient avec les miettes alimentaires issues de la granulation. Cette étape permet de maximiser l'impact organoleptique de ces ingrédients ajoutés en surface des miettes par rapport aux coûts des ingrédients.

Selon un mode de réalisation, le procédé comprend en outre :
- enrober les miettes alimentaires séchées.

Selon un mode de réalisation, le procédé comprend en outre :
- mélanger au moins deux produits alimentaires pour obtenir le mélange alimentaire.

Selon un mode de réalisation, l'invention fournit des miettes alimentaires obtenues par le procédé précédemment décrit.

Les miettes alimentaires présentent une dimension inférieure ou égale à 25 mm, de préférence comprise entre 0,5 et 15 mm.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[fig.1] La figure 1 représente schématiquement les étapes du procédé de la présente invention.
[fig. 2] La figure 2 est une vue schématique en perspective d'un granulateur comportant un tamis et un rotor à mouvement oscillant ou rotatif autour d'un axe horizontal, pouvant être utilisé dans une étape de granulation.

### Description des modes de réalisation

Les miettes alimentaires fabriquées par le procédé qui va être décrit par la suite, appartiennent à deux familles : les miettes de biscuits et les miettes d'aliments végétaux.

Les miettes de biscuit, aussi appelées miettes de pâtisserie sont généralement issues de tous types de recettes qu'elles soient traditionnelles ou créatives. A titre d'exemple et sans que ceci ne soit aucunement exhaustif, il peut s'agir de poudres ou miettes de petit beurre, palet, galette, sablé, macaron, spéculos, cookies, brownies, génoise, madeleine, rocher, croquant, shortbread, lemon and poppyseed cake, pumpernickel, piparkakku, amaretti, meringue, mantecados, makroud, cracker, biscuits salés ou de toutes autres recettes de biscuits ou pâtisseries non fermentés. Ces types de miettes sucrées ou salées recourent généralement à des associations en proportions très variables de matières premières telles que :
- des matières riches en glucides comme les farines, les céréales, les amidons, les amidons modifiés, les maltodextrines, les sucres, les polyols, les sirops, les miels, les caramels, ..., et/ou
- de matières contenant des protéines, et/ou des matières grasses et/ou des fibres comme les matières laitières et leurs dérivés, les ovoproduits et leurs dérivés, les matières grasses d'origine végétale ou animale, les sons,..., et/ou
- de toutes autres matières alimentaires comme des fruits, des fruits secs, des légumes, des herbes et/ou des algues, sous forme entière, ou en morceaux, ou sous forme de pulpe, de purée, de concentrés, d'extraits ou de poudres, des fromages râpés ou en poudre, des épices, des aromates, des arômes et/ou des préparations aromatiques, des dérivés du cacao, du café, ou de graines diverses, de sel, de matières à pouvoir acidifiant, affermissant, d'agent de charge, d'agent d'enrobage, anti-agglomérant, antioxydant, aromatisant, colorant, conservateur, édulcorant, émulsifiant, épaississant, exhausteur de goût, gélifiant, humectant, nutritionnel, levant chimique (non vivant), liant, stabilisant, de support, et/ou texturant.

Les miettes de biscuits sont aussi appelés éclats, pépites, « crumbles », granules ou encore poudres de biscuits ou de pâtisseries.

Les miettes d'aliments végétaux, aussi appelées éclats, pépites, morceaux, granules ou encore poudre d'aliments végétaux sont issues de fruits et/ou de légumes, utilisés en association avec d'autres matières premières pouvant être utilisées ou consommés de manière semblable ou proche à celle des modes d'usage ou de consommation de fruits ou légumes déshydratés classiques, ou de préparations à base de fruits ou de légumes, sèches ou moelleuses, et se présentant sous forme d'éclats, pépites ou poudres.

Ces miettes intègrent classiquement une proportion significative de fruits et/ou de légumes, typiquement au moins de 15%, voire plus typiquement au moins de 20% voire 25%. Cette proportion importante combinée à l'association avec d'autres matières plutôt assez neutres en goût conduit généralement à dénommer ces produits sous le terme « fruits déshydratés », « fruits moelleux », « légumes déshydratés », ou « légumes moelleux », même si ces produits intègrent d'autres matières, ayant par exemple un rôle de support, de texturant ou de liant, ou permettant de réaliser des miettes ou des poudres moins coûteuses que celles obtenues intégralement à base de fruits et/ou de légumes.

Les matières associées dans ce cas aux fruits et/ou légumes dans des proportions très variables, sont typiquement :
- des matières riches en glucides telles que farines, céréales, amidons, amidons modifiés, maltodextrines, sucres, polyols, sirops, miel, caramels, ...
- des matières grasses d'origine végétale ou animale et/ou des fibres et/ou du sel
- des matières riches en protéines
- toutes matières, ingrédients et/ou additifs à pouvoir acidifiant, affermissant, d'agent de charge, d'agent d'enrobage, anti-agglomérant, antioxydant, aromatisant, colorant, conservateur, édulcorant, émulsifiant, épaississant, exhausteur de goût, gélifiant, humectant, nutritionnel, levant chimique (non vivant), liant, stabilisant, de support, et/ou texturant.

Les miettes alimentaires fabriquées par le procédé ci-dessus présentent une dimension ou taille moyenne en section inférieure ou égale à 25 mm, préférentiellement entre 0,5 mm et 15 mm. La dimension en section fait ici référence à l'ouverture d'un tamis du granulateur qui laisse passer la miette. La dimension moyenne en section signifie la moyenne de la distribution de mesures des dimensions en section des miettes alimentaires.

La première étape 100 du procédé consiste à mélanger des matières diverses. Les matières les plus communément utilisées sont celles décrites plus haut. Ces matières utilisées n'intègrent pas les levures ou d'autres micro-organismes propres à provoquer une levée de la pâte, ainsi le mélange ne sera pas fermenté.

Le mélange se fait typiquement dans des mélangeurs, pétrins ou malaxeurs à mouvement planétaire, ou vertical ou horizontal. Compte tenu de l'emploi de certaines matières contenant de l'humidité, et/ou de l'ajout d'eau, le mélange alimentaire obtenu se présente généralement sous forme d'une pâte humide plus ou moins fluide ou épaisse, et non fermentée.

Ensuite le mélange alimentaire est disposé sous forme de plaques ou de rubans de pâte ou sous forme de pièces individuelles de diverses formes et tailles sur un support généralement constitué de plaques métalliques ou de bandes métalliques continues. Puis elles sont placées dans un four ou une étuve pour entamer l'étape de cuisson 101. Eventuellement, un papier de cuisson ou un élément souple tel qu'un tapis à base de silicone alimentaire apte à la cuisson est interposé entre le mélange alimentaire et le support.

Le barème de température de l'étape de cuisson 101 se situe à une température unique ou variable dans le temps par paliers successifs. La température de cuisson est typiquement entre 90°C et 200 °C pendant 10 à 150 minutes, par exemple en four rotatif à chariot, ou en four tunnel continu.

A la fin de la cuisson, une composition cuite jusqu'à un taux d'humidité intermédiaire compris entre 7% et 24% est obtenue. Celle-ci est refroidie selon une étape de refroidissement 102. Le barème de température de l'étape de refroidissement se situe entre 0°C et 35°C. En général, après 1 à 2 heures, la composition cuite est sensiblement à température ambiante. Selon les types de compositions cuites, il peut être nécessaire d'attendre un peu plus longtemps, par exemple 6 à 48 heures. Le but est que la composition cuite soit encore relativement moelleuse pour éviter la casse des tamis et/ou pour éviter de générer des taux excessifs de miettes trop fines lors de l'étape suivante de granulation, mais cependant suffisamment résistante et cohésive pour être aisément manipulée et séparée du support de cuisson pour les étapes suivantes, sans se désagréger en une masse trop molle, informe, et sans tenue. Dans certains cas, par exemple lorsque les mélanges alimentaires sont riches en protéines, les compositions cuites peuvent être manipulées et subir les étapes suivantes du procédé dès la fin de leur refroidissement, voire encore tièdes, l'essentiel étant qu'elles aient une tenue et une cohésion suffisante pour ne pas se transformer en masse molle et informe dès leur manipulation manuelle et/ou mécanique.

Optionnellement, il peut être utile de réaliser une étape 103 de pré-coupe/pré-fractionnement ou un pré-calibrage des compositions cuites en les passant sur des machines comme par exemple une cubeuse, un concasseur, un déchiqueteur, un émietteur ou un émotteur. Ces machines peuvent ainsi avantageusement permettre de mieux préparer les compositions cuites à leur passage ultérieur dans un granulateur.

La composition cuite est alors introduite dans le granulateur au niveau de son rotor oscillant, pour l'étape de granulation 104. Le rotor est muni de plans ou de pales ou de lamelles venant presser le mélange cuit contre un tamis. Le tamis peut être une grille ou une tôle perforée. Il peut être statique ou en mouvement. Le tamis est interchangeable avec d'autres tamis. Il présente préférentiellement une maille carrée. L'ouverture du tamis est comprise entre 0,2 mm et 25 mm, et plus souvent entre 0,5 mm et 15 mm. L'ouverture de maille du tamis est choisie en fonction de la granulométrie finale maximale souhaitée des miettes alimentaires en effet une des dimensions des miettes alimentaires est déterminée par les dimensions des tamis. Ceci est typiquement fait par un granulateur oscillant modèle MG-205 ou MGI-205 ou MGI-624 ou MG-624 ou MG-628 ou MGI-628 ou MF-6 de la société Frewitt (société suisse). Le rotor oscillant opère typiquement selon une fréquence d'oscillation comprise entre 0,2 et 5 oscillations par seconde, et préférentiellement entre 0,5 et 2 oscillations par seconde, 1 oscillation correspondant à 1 aller-retour complet du rotor. Ainsi le pincement de la composition par le rotor oscillant contre le tamis est progressif et permet de minimiser les taux de fines car la matière n'est ni trop molle et ni trop dure. La composition cuite peut être passée ainsi sur un seul granulateur oscillant, voire sur plusieurs granulateurs successifs équipés de tamis à maille de taille décroissante, afin de procéder à une réduction progressive et douce de la taille des miettes obtenues.

Similairement des granulateurs à rotor oscillant, les compositions cuites peuvent aussi être fractionnées par des machines disposant d'un rotor tournant, par exemple décrit dans la publication WO2016/092456. Typiquement la vitesse tangentielle au niveau des points de pincement est comprise entre 5 cm.s⁻¹ et 100 cm.s⁻¹.

Les vitesses d'oscillation ou de rotation du rotor, et des tamis du granulateur, dans le cas où ceux-ci sont également en mouvement, sont choisies de manière à assurer un pincement, un cisaillement et une coupe progressifs et doux des produits, excluant des vitesses de rotation, d'oscillation ou d'avancement élevées.

A l'issue de l'étape 104, les miettes alimentaires présentent une taille moyenne inférieure à un seuil maximal.

Dans le cas où des miettes alimentaires conservant une texture moelleuse sont souhaitées, c'est-à-dire que le taux d'humidité de ces miettes est inférieur ou égal à 24%, voire plus typiquement inférieur à 19%, les miettes alimentaires issues de l'étape 104 peuvent être refroidies, si besoin tamisées, conditionnées, et/ou conservées en environnement réfrigéré, soit entre 0°C et +6°C, ou en environnement surgelé afin de garantir leur conservation et notamment éviter des altérations microbiennes, notamment la croissance de moisissures ou levures.

Alternativement, à l'issue de l'étape 104, les miettes peuvent être mélangées avec d'autres ingrédients lors de l'étape 105. Ces ingrédients sont généralement ceux les plus sensibles aux contraintes thermiques et/ou les plus coûteux. Ce mélange peut typiquement être fait en associant les miettes à des matières grasses et/ou des protéines et/ou des glucides et/ou des ingrédients comme par exemple :
- des fromages râpés ou en poudre ;
- des concentrés ou des extraits de fruits ou de légumes, ou de jus de fruits ou légumes, ou de pulpes de fruits ou légumes ;
- des concentrés ou préparations aromatiques ;
- diverses préparations associant par exemple les ingrédients ci-dessus avec des matières grasses animales ou végétales, et des ingrédients à pouvoir enrobant ou texturants.

Cette étape permet d'obtenir une bonne répartition principalement en surface de ces ingrédients « à valeur ajoutée » car lors de la dégustation finale du « crumble » il est clair que les ingrédients présents en surface délivrent un impact majeur et déterminant en termes de couleur et/ou de goût, voire de texture. Etant généralement parmi les ingrédients les plus coûteux, il est préférable qu'ils soient « physiquement situés » plutôt en surface du « crumble », leur présence au sein même de la « base » n'apparaissant pas aussi utile, et étant moins favorable en termes économiques. Par ailleurs leur incorporation dès l'étape 100 les exposerait aux traitements thermiques de l'étape 101, et donc pourrait conduire à une altération plus significative de leurs apports en termes de goût et/ou couleur et/ou texture et/ou qualité nutritionnelle.

A l'issue de l'étape 104 ou 105, les miettes alimentaires sont séchées, lors de l'étape 106, dans un four ou une étuve de manière à diminuer le taux d'humidité dans les miettes alimentaires, Le taux d'humidité est alors typiquement inférieur à 6%, préférentiellement inférieur à 3%. Un tel taux d'humidité convient notamment aux contraintes du marché pour les produits secs lesquels peuvent nécessiter un stockage et une conservation à température ambiante, avec une durée de vie de plusieurs mois, tout en ayant des textures croustillantes ou croquantes, et/ou faciles à doser du fait de leur bonne faculté d'écoulement.

Lors de l'étape de séchage 106, le barème de température est généralement moins élevé que l'étape 101 et est appliqué pendant des durées variables. Moins la température de séchage est élevée, plus le temps de l'étape de séchage doit être allongé. Typiquement la température de séchage est comprise entre 70°C et 175 °C pendant une durée variant de 5 minutes à 5 heures. Les miettes alimentaires peuvent aussi être séchées sous vide dans des enceintes prévues à cet effet, éventuellement à des températures plus basses et/ou sur des durées plus longues que celles mentionnées ci-dessus.

Après l'étape 106, les miettes alimentaires séchées peuvent être enrobées lors de l'étape d'enrobage 107. Les enrobages sont par exemple des enrobages gras et/ou sucrés à base de beurre de cacao et/ou autres matières grasses et/ou chocolat et/ou caramel et/ou autres matières sucrantes et/ou texturantes et/ou gélifiantes ayant des fonctions barrière intéressantes, notamment empêchant l'humidité du produit dans lequel sera incorporée la miette, ou l'humidité de l'air ambiant de pénétrer dans la miette, ou freinant ce phénomène.

Soit à l'issue de l'étape 106 ou 107, les miettes alimentaires séchées peuvent être à nouveau refroidies, si besoin tamisées, conditionnées et stockées dans l'attente de leur utilisation ou de leur expédition vers les clients et utilisateurs de ces produits lors de l'étape 108. Le tamisage ici réalisé a généralement pour objet d'éliminer les particules trop petites ou trop grosses par rapport à l'objectif de tailles minimum et maximum visées. Ce tamisage s'opère de manière classique sur un tamis vibrant. Ainsi, par exemple, à l'issue de l'étape 104, la borne supérieure de la taille moyenne des miettes alimentaires sèches est de 7 mm du fait que le tamis du granulateur présente une ouverture de maille de 7 mm. A l'étape 108, en utilisant un tamis vibrant dont une ouverture de maille est de 2 mm, on peut alors obtenir une taille moyenne de miettes alimentaires sèches comprise entre 2 mm et 7 mm au lieu de 0 à 7 mm

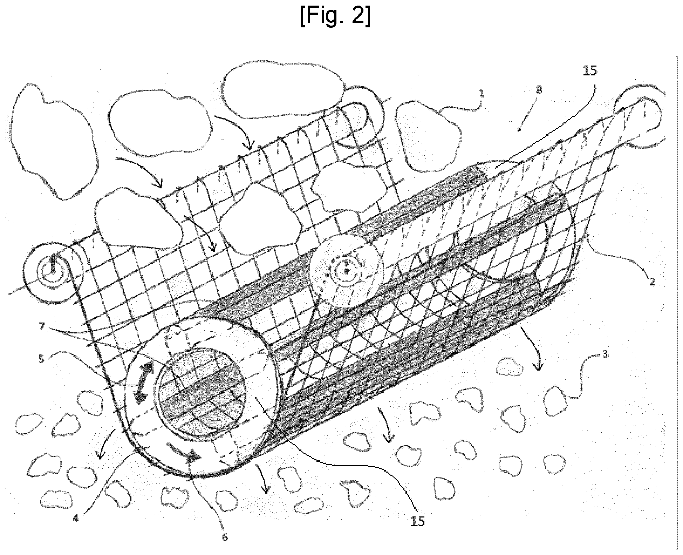

La figure 2 illustre la formation de miettes selon un mode de réalisation. Cette étape est effectuée à la suite de l'étape de cuisson et de refroidissement décrite précédemment.

La composition cuite et refroidie 1 est introduite sous la forme de plaques, de rubans ou de morceaux de grande taille dans un granulateur 8. Le granulateur 8 comprend un rotor 4 de forme cylindrique creux et un tamis 2. Le rotor 4 est composé de plusieurs pales métalliques 7, par exemple quatre pales 7, parallèles et régulièrement espacées entre elles autour d'un axe de rotation horizontal. L'espace entre deux pales métalliques 7 est suffisamment grand pour que la composition puisse entrer et sortir de la partie creuse du rotor 4 au cours du fonctionnement. Les pales métalliques 7 s'étendent dans la direction axiale du cylindre et sont soudées en leurs extrémités respectivement sur deux disques métalliques 15 se faisant face. Les deux disques métalliques 15 sont montés en rotation sur des paliers ou des arbres non représentés. Selon des modes de réalisation, le mouvement effectué par le rotor 4 du granulateur 8 est oscillant comme indiqué par la double-flèche 5 ou rotatif comme indiqué par la flèche 6.

Le tamis métallique 2 comprend des mailles carrées de taille identique. La base du tamis 2 est située en dessous du rotor 4 et s'étend horizontalement sur toute la longueur du rotor 4. La base du tamis 2 présente un rayon de courbure sensiblement similaire au rayon du rotor 4 de manière à recevoir l'appui des pales métalliques 7 sur une surface relativement étendue. L'essentiel de la production des miettes alimentaires 3 se fait dans une zone de rapprochement entre le rotor 4 et le tamis 2, à savoir schématiquement dans une région azimutale située entre 7 h et 8 h et entre 4 h et 5 h selon un cadran d'horloge. Le tamis 2 est en forme de berceau arrondi et s'étend en hauteur sur les côtés au-dessus du rotor 4. Cette forme du tamis permet de réceptionner la composition cuite et refroidie 1 et de la diriger vers le rotor 4 par gravité. Durant l'étape de granulation, la composition cuite et refroidie 1 sera ajoutée dans le granulateur 8, sur le tamis 2 et sur le rotor 4. La composition cuite et refroidie 1 peut passer dans la partie creuse du rotor 4 au cours de l'oscillation 5 ou de la rotation 6 du rotor 4.

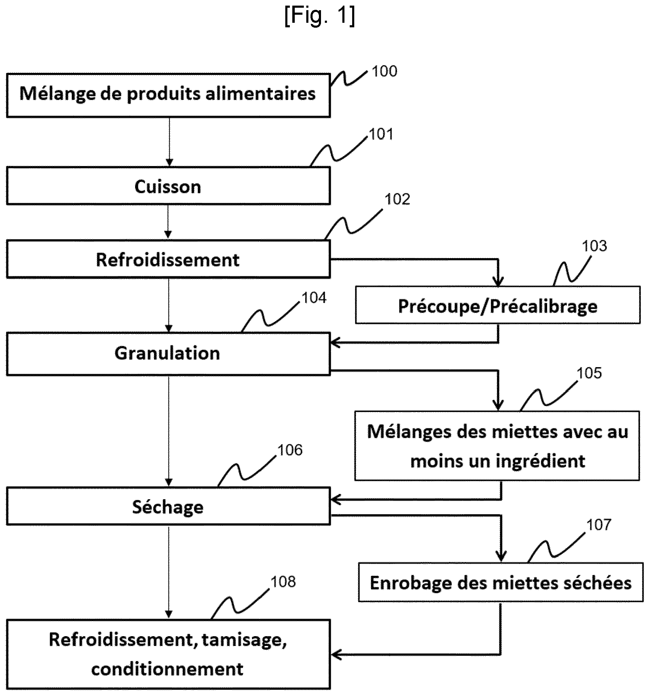

Lors du mouvement oscillant 5 ou rotatif 6 du rotor 4 autour de son axe horizontal, les pales 7 pressent la composition cuite et refroidie 1 contre les mailles situées au niveau de la base et des flancs du tamis 2. Par exemple, les paramètres utilisés concernant le mouvement oscillant du rotor 4 sont ceux décrits précédemment dans la description de la figure 1. Cette action va permettre le passage et le fractionnement de la composition cuite et refroidie 1 sous l'effet d'un pincement doux du rotor 4 contre le tamis 2 du granulateur 8 afin de former les miettes alimentaires 3. Le passage de la composition cuite et refroidie 1 se fait perpendiculairement à l'axe horizontal de rotation du rotor.

Les pales métalliques 7 présentent ici une section polygonale à cinq côtés, comportant une base rectangulaire tournée radialement vers l'intérieur du rotor 4 et une pointe triangulaire tournée radialement vers l'extérieur du rotor 4. Dans d'autres modes de réalisation, la forme des pales 7 peut être différente, par exemple en forme de tige cylindrique, de plan ou de lamelle.

L'arrangement selon ce mode de réalisation est particulièrement avantageux car il permet une intégration facilitée dans une filière de production industrielle.

### Exemples

Les exemples suivants illustrent un mode de réalisation de l'invention.

### Exemple 1 : Fabrication de miettes de biscuits au cacao.

Un mélange alimentaire est réalisé associant 20 kg de farine de blé avec 20 kg de sucre, 6 kg de poudre de cacao alcalinisée à 21% de matière grasse, 9 kg d'huile de tournesol, 12 kg d'eau et 300 g de sel. Le mélange est effectué par un pétrin jusqu'à obtention d'une pâte homogène. Le mélange homogène est cuit en four à 166°C pendant 25 minutes puis refroidi pendant 24 heures afin d'obtenir une composition cuite. Le taux d'humidité de la composition cuite est typiquement d'environ 11 % à 14%. La composition cuite est ensuite introduite dans un granulateur à rotor oscillant dont la fréquence d'oscillation est de 1 Hertz. Le granulateur est équipé d'une grille à ouverture carrée de 7 mm. Les miettes ainsi obtenues sont ensuite séchées en four à 155°C pendant 32 minutes, puis refroidies avant passage sur un tamis vibrant équipé d'un tamis à ouverture carrées de 2 mm.

Les miettes séchées, dont la taille moyenne est comprise essentiellement entre 2 et 7 mm, sont alors conditionnées dans un sac soudé étanche. Leur taux d'humidité résiduelle est typiquement inférieur à 3%. La proportion de particules fines, c'est-à-dire dont la taille moyenne est inférieure à 2 mm, est typiquement inférieure à 10%. Les particules fines peuvent être éliminées lors du passage sur le tamis vibrant.

### Exemple 2 : Fabrication de « crumbles » à la framboise enrobés de beurre de cacao.

Un mélange alimentaire est réalisé en mélangeant 20 kg de farine de blé avec 20 kg de sucre, 20 kg de purée de framboise obtenue par broyage de framboises, 5 kg d'huile de tournesol, 5 kg de beurre de cacao et 400 g de sel. Ce mélange est effectué par un pétrin jusqu'à obtention d'une pâte homogène. Ce mélange alimentaire homogène est cuit en four selon deux paliers de cuisson successifs, respectivement de 155°C pendant 20 minutes, suivi de 120°C pendant 16 minutes, puis refroidi pendant 24 heures. Cela permet d'obtenir une composition cuite dont le taux d'humidité est typiquement d'environ 15 % à 17%. La composition cuite est introduite dans un granulateur à rotor oscillant dont la fréquence d'oscillation est de 1 Hertz. Le granulateur est équipé d'une grille à ouverture carrée de 12 mm. Les miettes alimentaires ainsi obtenues sont ensuite séchées en four à 90°C pendant 2 heures, puis refroidies. Leur taux d'humidité résiduelle est typiquement inférieur à 3%. Les miettes séchées ainsi obtenues sont alors enrobées d'une proportion de 20% de beurre de cacao dans une installation d'enrobage appropriée, puis conditionnées dans un sac soudé étanche.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention telle que définie par les revendications.

Dans les revendications, tout signe de référence entre parenthèses ne saurait être interprété comme une limitation de la revendication.

## Revendications

1. Procédé de fabrication de miettes alimentaires de biscuits ou d'aliments végétaux comprenant :
- mélanger des matières afin de former un mélange alimentaire non fermenté,
- disposer sur un support le mélange alimentaire non fermenté sous forme de plaques ou de rubans de pâte ou sous forme de pièces individuelles,
- cuire le mélange alimentaire non fermenté dans un four ou une étuve jusqu'à atteindre un taux d'humidité intermédiaire compris entre 7% et 24% pour obtenir une composition cuite, puis
- refroidir la composition cuite de manière à ce que la texture de la composition cuite soit adaptée pour la granulation, le refroidissement étant effectué à une température comprise entre 0°C et 35°C pendant une durée comprise entre 1h et 48h, puis
- granuler la composition cuite grâce à un granulateur pour obtenir des miettes alimentaires, dans lequel le granulateur comprend un rotor et un tamis, le rotor étant muni de plans ou de pales ou de lamelles venant presser la composition cuite contre le tamis, et dans lequel le rotor effectue un mouvement oscillant ou rotatif, dans lequel le tamis présente une ouverture de maille comprise entre 0,2 mm et 25 mm, et
dans lequel les miettes alimentaires présentent une dimension inférieure ou égale à 25 mm,
- sécher les miettes alimentaires dans un four ou une étuve de manière à diminuer le taux d'humidité dans les miettes alimentaires.

2. Procédé selon la revendication 1, dans lequel on cuit le mélange alimentaire non fermenté jusqu'à atteindre un taux d'humidité intermédiaire compris entre 9 % et 19 %.

3. Procédé selon l'une des revendications 1 à 2, dans lequel la cuisson est effectuée à au moins une température de cuisson comprise entre 90°C et 200°C pendant une durée comprise entre 10 et 150 min.

4. Procédé selon l'une des revendications 1 à 3, dans lequel la cuisson est effectuée à une température variable au cours de la cuisson.

5. Procédé selon l'une des revendications 1 à 4, dans lequel le rotor effectue un mouvement oscillant.

6. Procédé selon la revendication 5, dans lequel le mouvement oscillant présente une fréquence d'oscillation comprise entre 0,2 et 5 Hz, préférentiellement entre 0,5 et 2 Hz.

7. Procédé selon l'une des revendications 1 à 6, dans lequel une vitesse tangentielle au niveau d'un point de pincement de la composition cuite entre une extrémité du rotor et le tamis est comprise entre 5 cm.s⁻¹ et 100 cm.s⁻¹.

8. Procédé selon l'une des revendications 1 à 7, dans lequel le granulateur comprend un tamis à mailles carrées.

9. Procédé selon la revendication 8, dans lequel le tamis présente une ouverture de maille comprise entre 0,5 mm et 15 mm.

10. Procédé selon l'une des revendications 1 à 9, comprenant en outre :
- conserver les miettes alimentaires à une température comprise entre -18°C et +6°C après l'étape de granulation.

11. Procédé selon l'une des revendications 1 à 10, dans lequel ledit refroidissement est effectué pendant une durée comprise entre 6h et 48h.

12. Procédé selon la revendication 1, dans lequel le séchage est effectué à une température comprise entre 70 et 175°C pendant une durée comprise entre 5 min et 5h.

13. Procédé selon l'une des revendications 1 à 12, dans lequel on sèche les miettes alimentaires jusqu'à un taux d'humidité inférieur à 6%, de préférence inférieur à 3%.

14. Procédé selon l'une des revendications 1 à 13, comprenant en outre :
- tamiser les miettes alimentaires séchées dans un tamis vibrant présentant une maille d'ouverture déterminée.

## Patentansprüche

1. Verfahren zur Herstellung von Lebensmittelbröseln aus Keks oder pflanzlichen Lebensmitteln, umfassend:
- Mischen von Materialien, um eine nichtfermentierte Lebensmittelmischung zu bilden,
- Anordnen der nicht fermentierten Lebensmittelmischung in Form von Teigplatten oder -bändern oder in Form einzelner Stücke auf einem Träger,
- Backen der nichtfermentierten Lebensmittelmischung in einem Ofen oder Trockenschrank bis zur Erreichung eines Zwischenfeuchtigkeitsgehaltes zwischen 7% und 24%, um eine gebackene Zusammensetzung zu erhalten,
- Abkühlen der gebackenen Zusammensetzung, so dass die Textur der gebackenen Zusammensetzung für die Granulation geeignet ist, wobei das Abkühlen bei einer Temperatur zwischen 0°C und 35°C für eine Dauer zwischen 1h und 48h erfolgt, und dann
- Granulieren der gebackenen Zusammensetzung mittels eines Granulators, um Lebensmittelbrösel zu erhalten, wobei der Granulator einen Rotor und ein Sieb umfasst, wobei der Rotor mit Ebenen oder Flügeln oder Lamellen versehen ist, die die gebackene Zusammensetzung gegen das Sieb drücken, und wobei der Rotor eine oszillierende oder rotierende Bewegung ausführt, wobei das Sieb eine Maschenweite zwischen 0,2 mm und 25 mm aufweist, und
wobei die Lebensmittelbrösel eine Größe gleich oder kleiner 25 mm aufweisen,
- Trocknen der Lebensmittelbrösel in einem Ofen oder Trockenschrank, so dass der Feuchtigkeitsgehalt der Lebensmittelbrösel reduziert wird.

2. Verfahren gemäß Anspruch 1, wobei die nichtfermentierte Lebensmittelmischung bis zur Erreichung eines Zwischenfeuchtigkeitsgehaltes zwischen 9% und 19% gebacken wird.

3. Verfahren gemäß einem der Ansprüche 1 bis 2, wobei das Backen bei mindestens einer Backtemperatur zwischen 90°C und 200°C für eine Dauer zwischen 10 und 150 Min durchgeführt wird.

4. Verfahren gemäß einem der Ansprüche 1 bis 3, wobei das Backen mit einer während des Backens variablen Temperatur durchgeführt wird.

5. Verfahren gemäß einem der Ansprüche 1 bis 4, wobei der Rotor eine oszillierende Bewegung ausführt.

6. Verfahren gemäß Anspruch 5, wobei die oszillierende Bewegung eine Oszillationsfrequenz zwischen 0,2 und 5 Hz, vorzugsweise zwischen 0,5 und 2 Hz, aufweist.

7. Verfahren gemäß einem der Ansprüche 1 bis 6, wobei eine Tangentialgeschwindigkeit an einem Einklemmungspunkt der gebackenen Zusammensetzung zwischen einem Ende des Rotors und dem Sieb zwischen 5 cm.s -1 und 100 cm.s -1 beträgt.

8. Verfahren gemäß einem der Ansprüche 1 bis 7, wobei der Granulator ein Sieb mit quadratischen Maschen umfasst.

9. Verfahren gemäß Anspruch 8, wobei das Sieb eine Maschenweite zwischen 0,5 mm und 15 mm aufweist.

10. Verfahren gemäß einem der Ansprüche 1 bis 9, umfassend weiterhin:
- Aufbewahren der Lebensmittelbrösel nach dem Granulierungsschritt bei einer Temperatur zwischen -18°C und +6°C.

11. Verfahren gemäß einem der Ansprüche 1 bis 10, wobei das Abkühlen für eine Dauer zwischen 6h und 48h erfolgt.

12. Verfahren gemäß Anspruch 1, wobei das Trocknen bei einer Temperatur zwischen 70 und 175 ° C und einer Dauer zwischen 5 Min und 5h erfolgt.

13. Verfahren gemäß einem der Ansprüche 1 bis 12, wobei die Lebensmittelbrösel bis zu einem Feuchtigkeitsgehalt unter 6%, vorzugsweise unter 3% getrocknet werden.

14. Verfahren gemäß einem der Ansprüche 1 bis 13, umfassend weiterhin:
- sieben der getrockneten Lebensmittelbrösel in einem vibrierenden Sieb, welches eine Masche mit vorgegebener Öffnung aufweist.

## Claims

1. Process for the manufacture of food flakes of biscuits or plant food type comprising:
- mix materials to form a nonfermented food mixture,
- arrange on a support the nonfermented food mixture in the form of sheets strips of pastry, or in the form of individual pieces,
- cook the nonfermented food mixture in an oven or a stove until an intermediate moisture content of between 7% and 24% is achieved, in order to obtain a cooked composition, then
- cooling the cooked composition so that the texture of the cooked composition is suitable for granulation, the cooling being carried out at a temperature of between 0°C and 35°C for a period of time of between 1 h and 48 h, then
- granulating the cooked composition by virtue of a granulator in order to obtain food flakes, in which the granulator comprises a rotor and a sieve, the rotor being provided with fins or vanes or slats to press the cooked composition against the sieve, and in which the rotor carries out an oscillating or rotating movement, in which the sieve exhibits a mesh size of between 0.2 mm and 25 mm,
in which the food flakes exhibit a dimension of less than or equal to 25 mm,
- drying the food flakes in an oven or a stove to reduce the moisture content in the food flakes.

2. Process according to Claim 1, in which the nonfermented food mixture is cooked until an intermediate moisture content of between 9% and 19% is achieved.

3. Process according to either of Claims 1 and 2, in which the cooking is carried out at at least a cooking temperature of between 90°C and 200°C for a period of time of between 10 and 150 min.

4. Process according to one of Claims 1 to 3, in which the cooking is carried out at a temperature which varies during the cooking.

5. Process according to one of Claims 1 to 4, in which the rotor carries out an oscillating movement.

6. Process according to Claim 5, in which the oscillating movement exhibits an oscillating frequency of between 0.2 and 5 Hz, preferentially between 0.5 and 2 Hz.

7. Process according to one of Claims 1 to 6, in which a tangential speed at a point of pinching the cooked composition between one end of the rotor and the sieve is between 5 cm.s⁻¹ and 100 cm.s⁻¹.

8. Process according to one of Claims 1 to 7, in which the granulator comprises a square-mesh sieve (2).

9. Process according to Claim 8, in which the sieve exhibits a mesh size of between 0.5 mm and 15 mm.

10. Process according to one of Claims 1 to 9, additionally comprising:
- storing the food flakes at a temperature of between -18°C and +6°C after the granulation stage.

11. Process according to one of Claims 1 to 10, in which said cooling is carried out for a period of time of between 6 h and 48 h.

12. Process according to Claim 1, in which the drying is carried out at a temperature of between 70 and 175°C for a period of time of between 5 min and 5 h.

13. Process according to one of Claims 1 to 12, in which the food flakes are dried down to a moisture content of less than 6%, preferably of less than 3%.

14. Process according to one of Claims 1 to 13, additionally comprising:
- sieving the dried food flakes in a vibrating sieve exhibiting a predetermined mesh size.
